Europäisches Patentamt

European Patent Office

Office européen des brevets

(19)

(11) Publication number: **0 083 959**
A1

(12) # EUROPEAN PATENT APPLICATION

(21) Application number: **83300006.0**

(22) Date of filing: **04.01.83**

(51) Int. Cl.³: **C 09 K 3/10**
**C 04 B 19/02, C 09 D 5/34**

(30) Priority: **05.01.82 GB 8200146**

(43) Date of publication of application:
**20.07.83 Bulletin 83/29**

(84) Designated Contracting States:
**AT BE DE FR GB LU NL**

(71) Applicant: POLYCELL PRODUCTS LIMITED
30 Broadwater Road
Welwyn Garden City Hertfordshire AL7 3AZ(GB)

(72) Inventor: Chester, Michael William
69 Woburn Close Bragbury End
Stevenage Hertfordshire(GB)

(72) Inventor: Janes, Leonard George
3 Great Conduit
Welwyn Garden City Hertfordshire(GB)

(74) Representative: Bizley, Richard Edward et al,
BOULT, WADE & TENNANT 27 Furnival street
London EC4A 1PQ(GB)

(54) Lightweight filler composition.

(57) The invention provides a lightweight filler composition comprising a closed, gas-filled, discrete sphere ceramic filler, a thixotropic rheology modifier, a water-dispersible resin, and water, the weight ratio filler/water in the composition being from about 1.3:1 to about 2.2:1.

Also described is a method for preparing a lightweight filler composition, which method includes the step of mixing a thixotropic rheology modifier and water in the absence of filler and using sufficient shear to form a gel therefrom, and mixing the resulting gel with a closed, gas-filled, discrete sphere ceramic filler and, if not present during said gel formation, a water-dispersible resin.

The invention enables a multipurpose filler to be produced which can be applied in thick layers and is quite suitable for "DIY" plastering or rendering, amongst other uses.

EP 0 083 959 A1

## LIGHTWEIGHT FILLER COMPOSITION

This invention relates to a lightweight filler composition having unique properties and to a method of making filler compositions.

One of the most difficult tasks for the amateur interested in "do-it-yourself" to perform satisfactorily is plastering. Known "do-it-yourself" plastering compositions are either limited in the extent to which a thick layer of the material can be built up or have an unsatisfactory texture when applied, being too dry and crumbly in nature. The present invention is concerned with a composition which may be used as a "do-it-yourself" plaster composition or base render which may also be used, for example, in repointing or as a general purpose filler. The present invention permits the application of thick layers of material which are very smooth compared to existing renders and which do not crack upon drying. The composition of the present invention is also unique in the combination of its workability, lightweight nature and ability to be modified either for outside or for inside use. The compositional aspects of this invention are based upon the discovery of the advantages of using a closed, gas-filled, discrete sphere ceramic filler in a particular weight ratio with water so as to give the unique combination of properties referred to.

According to the present invention there is provided a lightweight filler composition comprising a closed, gas-filled, discrete sphere ceramic filler, a thixotropic rheology modifier, a water-dispersible resin, and water, the weight ratio filler/water in the composition being from about 1.3:1 to about 2.2:1.

The invention also provides, in another aspect, a for preparing a lightweight filler composition, which method includes the step of mixing a thixotropic rheology modifier and water in the absence of filler and using sufficient shear to form a gel therefrom, and mixing the resulting gel with a closed, gas-filled, discrete sphere ceramic filler and, if not present during said gel formation, a water-dispersible resin.

The method is preferably performed at a temperature above $0^{o}C$ and at least part of the water mixed with the thixotropic rheology modifier may be provided by the water-dispersible resin being in the form of an aqueous emulsion. Naturally, it is highly preferred that the method be operated to provide a filler composition in which the filler/water ratio is as specified above. However, the invention is not limited to the provision of compositions having this particular filler/water ratio since the appreciation of the need to provide an independent step wherein water and the thixotropic rheology modifier are mixed in the absence of filler in order to get a satisfactory composition consistency provides an independent aspect of the present inventive concept.

A suitable filler material is the material known as Fillite which is available from Fillite (Runcorn) Limited of Runcorn, Cheshire, U.K. Fractured sphere fillers, e.g. perlite, are unsuitable for use in the present invention. Fillite is ideally suited to the present invention because of its lightweight and inert nature. Fillite may be described as an almost white, free-flowing, hollow, micro-sphere material which has, generally, a surface moisture of at most 0.5% and a hardness of Moh's scale 5. In terms of environmental hazard, Fillite is similar to talc, rouge etc. The long term effects of continued exposure are minimised as spheres below 5 microns diameter are not present. In fact, the grade of material preferred for use in the present invention is specified as 52/7 S which means that the average particle size (sphere diameter) is 52 microns and the sphere density is 0.7. Other grades of the material are available but the 52/7 S grade is preferred for the present invention. The Fillite shell material basically comprises alumina, silica and iron and the gas filling is primarily nitrogen and carbon-dioxide.

The thixotropic rheology modifier used in the present invention is preferably a thickening material chosen from water-swellable clays (such a laponite or bentonite), methacrylate thickeners (which are usually in the form of emulsions which gel at a pH above 9), polyacrylamides or cellulose ethers, e.g. hydroxyethyl cellulose or methylcellulose. The use of water-swellable clays is preferred. Of course, more than one such material may be present and it is often preferred to employ a cellulose ether thickener in addition to a water-swellable clay.

In one preferred embodiment the thixotropic rheology modifier comprises laponite, and methyl cellulose and/or hydroxyethyl cellulose.

In the compositions of the present invention the filler/water ratio is essentially between about 1.3:1 and about 2.2:1. Preferably this ratio is from about 1.5:1 to about 2:1. The most preferred ratio is about 1.7:1.

The resins which are used in the present invention are preferably employed in the form of aqueous emulsions. Such resins are preferably homopolymers or copolymers of ethylenically unsaturated monomers such as olefins, such as ethylene, propylene; unsaturated carboxylic acids and alkyl esters thereof, for example acrylic, methacrylic, itaconic, fumaric and maleic acids, methyl acrylate, ethyl acrylate, n-butyl acrylate, methyl methacrylate, 2-ethyl hexyl acrylate, n-butyl methacrylate, di-n-butyl maleate, di-n-butyl fumarate, and n-lauryl methacrylate; vinyl and vinylidene halides, for example vinyl chloride and vinylidene chloride; vinyl esters or carboxylic acids, for example vinyl acetate, vinyl proprionate, and the vinyl esters of mixed tertiary $C_{10}$ carboxylic acids; butadiene and isoprene; acrylonitrile and methacrylonitrile; and styrene and vinyl toluene.

The content of water-dispersible resin in the compositions of the present invention may be as low as 5% (referring to solids). However, it is preferred that the resin content be approximately from 10 to 15% (again based on the solids content). Since a part of the water of the overall composition is provided, in preferred compositions, by the resin in aqueous emulsion form, any reduction in the quantity of resin must be compensated for by an increase in water amount in order to maintain the correct filler/water ratio. An increase in the filler/water ratio above about 2.2:1 results in a product which becomes rather too dry and crumbly for completely satisfatory operation. On the other hand, a decrease in the ratio to lower than about 1.3:1 results in a product which is too runny and wet, and this spoils the ease of application of the product.

Various other ingredients may be included in the compositions of the present invention, e.g. preservatives, antifoaming agents, fibrous materials, pigments, insulating materials, and/or plasticizers. Preferred fibrous materials, which impart greater structural strength to the product, are glassfibres, polyester fibres, and/or carbon fibres. A preferred plasticizer is dibutylphthalate. As a suitable insulating material can be mentioned polystyrene beads (generally of approximately 1 mm diameter). The presence of such beads in the compositions of the present invention greatly increases their thermal insulating properties. Titanium pigments (which provide whitening to the composition) may be added, as may other pigments. Generally speaking, the quantity of pigment should not be increased above 5% by weight based on the overall composition. The preservative is a biocidal material which prevents interference from organisms such as fungal spores. The use of anti-foaming agents is preferred because during the preparating of the present compositions aeration of the paste-like material may be a problem in the absence of an anti-foaming agent.

As already indicated, in manufacturing compositions in accordance with the method of the present invention the application of sufficient shear to form a gel from the rheology modifier and water is important. A high shear mixer is therefore used, a suitable mixer being the mixer available from Mastermix Ltd. of Redditch under Model No. PMD Mark 4 and 5. Other high shear mixers may, of course, be used.

The compositions of the present invention may be painted directly onto surfaces such as walls but are preferably applied after the application to such surfaces of primers or undercoats conventional in the art. The composition of the present invention may be used to fill cracks and gaps in, for example, walls but should not be used in load-bearing circumstances. The composition can be readily decorated by the incorporation therein of suitable pigments or, after application in layers, can have conventional decorating materials applied thereto. A fine particle size plaster composition may be applied over a layer of the present composition to provide a smooth surface if desired. The present invention is perfectly capable of providing thick layers of material up to about two inches thick. Certainly irregularities in pre-existing surfaces of up to 1½ inches thick can be filled and covered in one coat using the present compositions. In general terms, the present compositions are ready-mixed, lightweight building compounds which can be used for most building repairs and filling operations.

The invention includes, of course, a method of filling, plastering, rendering, repointing, or laying of building blocks which comprises the use of a composition as defined above in a manner known per se save only for the ability to provide a layer of the composition of up to two inches thick.

The invention will now be described and illustrated further with reference to the following specific Examples.

0083959

8

(A) Form a novel premix as follows:—

Example 1

Composition for interior use

| SUPPLIER | RAW MATERIAL | GRADE | WEIGHT KG/BATCH | % BY WEIGHT | MANUFACTURING METHOD |
|---|---|---|---|---|---|
| | | | | | HIGH SPEED MIXER* |
| Laporte Industries | Water | — | 330.0 | 63.4176 | 1. Charge mixer with 330.0 litres of water. |
| | Clay | Laporte RD | 7.2 | 1.3837 | 2. Switch on mixer and add slowly 7.2Kgs of Laponite RD powder. |
| Hoechst UK | Methyl Cellulose | Tylose P6000Z | 2.0 | 0.3843 | 3. Mix for 5 minutes or until all of the Laponite has dissolved and a clear gel with no lumps has formed. |
| Hoechst UK | Biocide | Mergal S95 | 1.75 | 0.3363 | 4. Continue mixing and add slowly 2.0Kgs of Tylose P6000Z. |
| Diamond Shamrock | Antifoam | Nopco NXZ | 0.41 (410 gms) | 0.0788 | 5. Mix for 1 minute until dissolved. |
| Crown | VA/Veova resin emulsion | VE 3390 (331/071) | 179.0 | 34.3993 | 6. Continue mixing and add 1.75Kgs Mergal S95, 0.41Kgs Nopco NXZ and 179Kgs Crown emulsion. |
| | | | 520.36 | 100.0000 | 7. Mix for 1 minute after final addition. |
| | | | | | *PMD mixer available from Master-mix Ltd. of Redditch. |

-8-

(B) Form overall composition using premix from (A):-

| SUPPLIER | RAW MATERIAL | GRADE | WEIGHT KG/BATCH | % BY WEIGHT | MANUFACTURING METHOD |
|---|---|---|---|---|---|
| Fillite (Runcorn) Ltd. | Lightweight Silicate Filler | Fillite 52/7S | 500 | 49.0023 | **BARRON MIXER** ⊛<br><br>1. Charge the mixer with 520.36Kgs of Premix from high speed mixer. |
| – | Water | – | 330.0 ) | 32.3415 | |
| Laporte Industries | Clay | Laponite RD | 7.2 ) | 0.7056 | 2. Start mixer. |
| Hoechst UK | Methyl Cellulose | Tylose P6000Z | 2.0 ) | 0.1961 | 3. Add 25 bags of Fillite 52/7S while mixing. |
| Hoechst UK | Biocide | Mergal S95 | 1.75 ) as )<br>) Added<br>) 520.36Kg | 0.1715 | 4. Mix for 15 minutes.<br>5. Stop mixer and examine product. If any lumps or free liquid are present mix for further 5 minutes. |
| Diamond Shamrock | Antifoam | Nopco NXZ | 0.41 ) Premix<br>(410gms) ) | 0.0402 | |
| Crown | VA/Veova resin emulsion | VE 3390 (331/071) | 179.0 )<br>)<br>)<br>)<br>)<br>) | 17,5428 | ⊛ Available from Simon-Barron Ltd. of Gloucester – batch horizontal mixer of double ribbon blade type operating at 40 rpm. |
| | | | 1020.36 | 100.0000 | |

Example 2 Composition for interior and exterior use

-10-

(A) Form a novel premix as follows:-

| SUPPLIER | RAW MATERIAL | GRADE | WEIGHT KG/BATCH | % BY WEIGHT | MANUFACTURING METHOD |
|---|---|---|---|---|---|
| - | Water | - | 254.0 | 48.8114 | HIGH SPEED MIXER * <br><br> 1. Charge mixer with 254.0 litres of water. |
| Laporte Industries | Clay | Laponite RD | 7.2 | 1.3836 | |
| Hercules Powder | Hydroxy Ethyl Cellulose | Natrosol 250 HR | 2.0 | 0.3843 | 2. Switch on mixer and add slowly 7.2Kgs Laponite RD Powder. <br><br> 3. Mix for 5 minutes or until all of the Laponite has dispersed and no lumps are present. |
| Hoechst UK | Biocide | Mergal S95 | 1.75 | 0.3363 | |
| Diamond Shamrock | Antifoam | Nopco NXZ | 0.42 (420 gms) | 0.0807 | 4. Continue mixing and add slowly 2.0Kgs of Natrosol 250 HR. |
| Scott Bader Ltd | Styrene Acrylic Emulsion | Texicryl 17-0131 | 255.0 | 49.0036 | 5. Mix for 1 minute until dissolved. |
| | | | | | 6. Allow to stand for 5 minutes until a gel has formed. |
| | | | | | 7. Continue mixing and add 1.75 Kgs of Mergal S95, 0.42Kgs of Nopco NXZ and 255Kgs of Texicryl 17-0131. |
| | | | | | 8. Mix for 1 minute after final addition. |
| | | | 520.37 | 100.0000 | *PMD mixer available from Mastermix Ltd. of Redditch. |

/c
0083959

(B) Form overal composition using premix (A):-

| SUPPLIER | RAW MATERIAL | GRADE | WEIGHT KG/BATCH | % BY WEIGHT | MANUFACTURING METHOD |
|---|---|---|---|---|---|
| Fillite (Runcorn) Ltd. | Lightweight Silicate Filler | Fillite 52/7S | 500 | 48.5121 | **BARRON MIXER** ⊕<br><br>1. Charge the mixer with 520.37Kgs of Premix from the high speed mixer. |
| F.H.Wrigley Ltd. | Polyester Fibre (1mm in length) | - | 10.3 | 0.9993 | 2. Start mixer. |
| Laporte Industries | Water | - | 254.0 ) | 24.6442 | 3. Add 25 bags of Fillite 52/7S and 10.3Kgs Poly-ester fibres while mixing. |
|  | Clay | Laponite RD | 7.2 ) | 0.6986 |  |
| Hercules Powder | Hydroxy Ethyl Cellulose | Natrosol 250 HR | 2.0 ) Added as 520.37 ) Kg ) premix | 0.1940 | 4. Mix for 10 minutes. |
| Hoechst UK | Biocide | Mergal S95 | 1.75 ) | 0.1698 | 5. Stop mixer and examine product. If any lumps or free liquid are present mix for further 5 minutes. |
| Diamond Shamrock | Antifoam | Nopco NXZ | 0.42 (420gms) ) | 0.0408 |  |
| Scott Bader Ltd. | Styrene Acrylic Emulsion | Texicryl 17-0131 | 255.0 ) | 24.7412 | ⊕ Available from Simon-Barron Ltd. of Gloucester - a batch horizontal mixer of double ribbon blade type operating at 40 rpm. |
|  |  |  | 1030.67 | 100.0000 |  |

The above-prepared compositions had the following

properties:-

| PROPERTY | EXAMPLE 1 | EXAMPLE 2 |
|---|---|---|
| Flexibility of dried film | 8.3% | 16.6% |
| Tensile strength | 50.9 p.s.i. | 67.8 p.s.i. |
| Artificial weathering (on wood) | Softens after 1 cycle | Does not soften |
| Artificial weathering (on brick) | Softens after 20 hours | No effect after 100 hrs |
| Artificial weathering (salt spray) | Softens after 6 hours | No effect |
| Natural weathering | Softens in 1 week | Resistant after 2 months |
| Cross-brick adhesion | 39.1 p.s.i. | 48.4 p.s.i. |

CLAIMS:

1.    A lightweight filler composition comprising a closed, gas-filled, discrete sphere ceramic filler, a thixotropic rheology modifier, a water-dispersible resin, and water, the filler/water weight ratio in the composition being from about 1.3:1 to about 2.2:1.

2.    A composition as claimed in claim 1, wherein the filler/water ratio is about 1.7:1.

3.    A composition as claimed in claim 1 or claim 2, wherein the thixotropic rheology modifier is a water-swellable clay, a methacrylate thickener, a polyacrylate thickener, or a cellulose ether, or a mixture thereof.

4.    A composition as claimed in any one of claims 1 to 3, wherein the water-dispersible resin is a homopolymer or copolymer of ethylenically unsaturated monomers.

5.    A composition as claimed in any one of claims 1 to 4, also comprising a titanium pigment present in an amount up to 5% by weight of the overall composition.

6..   " A composition as claimed in any one of claims 1 to 5, also comprising polystyrene beads.

7..   A composition as claimed in any one of claims 1 to 6, also comprising dibutylphthalate as a plasticizer.

8.    A composition as claimed in any one of claims 1 to 7, wherein the filler has an average sphere diameter of 52 microns and a sphere density of 0.7.

9.      A composition as claimed in any one of claims 1 to 8, wherein the water-dispersible resin is present (on a solids basis) in an amount of no less than 5% by weight based upon the overall composition.

10.     A method for preparing a lightweight filler composition, which method includes the step of mixing a thixotropic rheology modifier and water in the absence of filler and using sufficient shear to form a gel therefrom, and mixing the resulting gel with a closed, gas-filled, discrete ceramic filler and, if not present during said gel formation, a water dispersible resin.

11.     A method as claimed in claim 10 wherein at least part of the water mixed with the thixotropic rheology modifier to form the gel is provided in the form of the water of an aqueous emulsion of the water-dispersible resin.

12.     A method as claimed in claim 10 or claim 11 and modified so as to produce a composition as claimed in any one of claims 1 to 9.

**European Patent Office**

**EUROPEAN SEARCH REPORT**

EP 83300006.8

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. ³) |
| A | DE - A - 1 644 779 (DEUTSCHE AMPHIBOLIN-WERKE VON ROBERT MURJAHN)<br><br>   * Page 2, lines 3-22; example 1; claim *<br><br>-- | 1,3,4 | C 09 K   3/10<br>C 04 B  19/02<br>C 09 D   5/34 |
| X | DE - A1 - 2 903 657 (WACHTER KG BAUSTOFFWERK-BAUTECHNIK)<br><br>   * Totality *<br><br>---- | 1-4,8-12 | |

| TECHNICAL FIELDS SEARCHED (Int. Cl. ³) |
|---|
| C 09 K<br>C 04 B<br>C 09 D |

The present search report has been drawn up for all claims

| Place of search | Date of completion of the search | Examiner |
|---|---|---|
| VIENNA | 15-03-1983 | KAHOVEC |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503 03 82